**Europäisches Patentamt**

**European Patent Office**

**Office européen des brevets**

(11) Veröffentlichungsnummer: **0 193 989 B1**

# EUROPÄISCHE PATENTSCHRIFT

(45) Veröffentlichungstag der Patentschrift: **10.06.92**

(21) Anmeldenummer: **86200284.7**

(22) Anmeldetag: **25.02.86**

(51) Int. Cl.⁵: **H02H 9/04**

(54) Überspannungsschutzschaltung für breitbandige digitale Leitungssysteme.

(30) Priorität: **26.02.85 DE 3506744**

(43) Veröffentlichungstag der Anmeldung:
**10.09.86 Patentblatt 86/37**

(45) Bekanntmachung des Hinweises auf die
Patenterteilung:
**10.06.92 Patentblatt 92/24**

(84) Benannte Vertragsstaaten:
**AT CH DE GB IT LI**

(56) Entgegenhaltungen:
**US-A- 3 181 033**
**US-A- 3 869 648**
**US-A- 4 390 919**
**US-A- 4 473 857**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**CH GB IT LI AT**

(72) Erfinder: **Haberditzl, Rainer, Dipl.-Ing. (FH)**
**Bürgweg 33**
**W-8500 Nürnberg(DE)**

(74) Vertreter: **Peuckert, Hermann, Dipl.-Ing. et al**
**Philips Patentverwaltung GmbH Wendenstrasse 35 Postfach 10 51 49**
**W-2000 Hamburg 1(DE)**

## Beschreibung

Die Erfindung betrifft eine Schaltungsanordnung zum Überspannungsschutz mit wenigstens einer Diode, für breitbandige digitale Leitungssysteme.

Die Belastung eines breitbandigen digitalen Leitungssignals durch die Überspannungsschutzschaltung muß auch bei hohen Taktfrequenzen klein sein, damit Impulsverformungen möglichst gering bleiben. Sowohl die Kapazität wie die Serieninduktivität der Überspannungsschutzschaltung müssen deshalb möglichst klein sein. Im anderen Fall sind starke Intersymbolstörungen sowie flache Anstiegs-und Abfallflanken der Impulse des digitalen Leitungssignals die Folge.

Zur Erzielung einer kleinen Gesamtkapazität einer Überspannungsschutzschaltung können mehrere Siliziumdioden in Serie geschaltet werden. Jedoch weist eine solche Anordnung eine hohe Serieninduktivität auf, außerdem stört die Massekapazität der Verbindungsleitungen zwischen den einzelnen Dioden. Die Grenzfrequenz dieser Anordnung ist niedrig. Eine Verminderung von Serieninduktivität und Massekapazität wird erzielt, wenn mehrere Dioden in ein Gehäuse eingebaut werden. Diese Dioden sind hoch zuverlässiger Ausführung in Glas- oder Keramikgehäuse sehr teuer, da sie speziell für diesen Zweck gefertigt werden müssen.

Aus der DE-AS 27 54 409 ist es bekannt, ein oder mehrere Dioden mit externen Spannungen in Sperrichtung vorzuspannen. Die Anwendung dieser Schaltung für ein System, bei dem für die Übertragung Ternärsignale benutzt werden, führt zu Schwierigkeiten, weil Gleichspannungen unterschiedlicher Polarität vorhanden sein müssen oder das Leitungssignal über Koppelkondensatoren auf ein Zwischenpotential gelegt werden muß. Durch die Vielzahl der hierfür benötigten Bauelemente ist die Massekapazität der gesamten Anordnung relativ hoch.

In US-A-4,390,919 ist eine Schutzschaltungsanordnung angegeben, mit der elektrische Einrichtungen vor Spannungsspitzen hoher Amplitude und schneller Anstiegszeit geschützt werden sollen. Dabei ist an elektrische Einrichtungen gedacht, die im UHF-Band (225 bis 400 MHz) arbeiten. Die Schutzschaltungsanordnung besteht aus einer Serienschaltung aus einer Diode und einer Zenerdiode parallel zum Übertragungsweg, bei der parallel zur Zenerdiode ein Kondensator geschaltet ist. Die Diode ist durch eine von außen herangeführte Vorspannung in Sperrichtung vorgespannt. Es ist ausgeführt, daß der parallel zur Zenerdiode angeordnete Kondensator auch den Zweck hat, Rauschen zu unterdrücken das von der Zenerdiode erzeugt ist, so daß dieses Rauschen nicht auf die Übertragungsleitung gelangen kann.

Eine andere Schutzschaltungsanordnung ist in US-A-3,869,684 angegeben. Zwischen den Eingang der Schaltungsanordnung und Erde ist eine Funkenstrecke angeordnet. Ferner ist an den Eingang der Schaltungsanordnung eine Verzögerungsleitung angeschlossen, deren Ausgang einerseits mit dem Ausgang der Schaltungsanordnung und andererseits mit zwei antiparallel geschalteten Serienschaltungen aus einer lichtaktivierbaren Schottky-Diode und einer Zenerdiode verbunden sind, die jeweils an Erde angeschlossen sind. Parallel zu den Zenerdioden sind Kondensatoren angeordnet. Bei Auftreten einer Überspannung am Eingang wird diese zunächst über die Funkenstrecke nach Erde abgeleitet. Durch den an der Funkenstrecke auftretenden Lichtblitz werden die Schottky-Dioden aktiviert, wodurch eine Ableitung der noch vorhandenen jedoch unterhalb der Ansprechgrenze der Funkenstrecke liegenden Überspannung bewirkt wird. In diesem Fall werden die parallel zu den Zenerdioden angeordneten Kondensatoren kurzfristig aufgeladen und durch diese Kondensatorspannungen sind die Schottky-Dioden wieder sperrbar, sobald die Überspannung abgeklungen ist.

Der Erfindung liegt die Aufgabe zugrunde, eine Schaltungsanordnung der eingangs genannten Art anzugeben, welche ohne zusätzlich angelegte Sperrspannungen auskommt und sowohl eine kleine Kapazität wie auch eine kleine Serieninduktivität aufweist und bei der Massekapazitäten auch für hohe Taktfrequenzen vernachlässigbar sind. Die Überspannungsschutzschaltung soll mit handelsüblichen Bauelementen bis zu Taktfrequenzen von etwa 1 GHz verwendbar sein.

Diese Aufgabe wird mit einer Schaltungsanordnung zum Überspannungsschutz für breitbandige Leitungssysteme, mit einer Serienschaltung aus einer Diode (D2) und einem Begrenzungselement (D1) und einem Kondensator (C1) parallel zum Begrenzungselement (D1), der nur durch die Kondensatorspannung in Sperrichtung vorgespannt ist, gemäß der Erfindung dadurch gelöst dadurch gekennzeichnet, daß der Kondensator durch das über den Übertragungsweg übertragene digitale Signal bei Erreichen seines Scheitelwertes (Ud) aufgeladen wird und dadurch eine Kondensatorspannung zur Verfügung steht, an der ein Pegelüberwachungssignal abnehmbar ist.

Anhand der in den Figuren dargestellten Ausführungsbeispiele soll im Folgenden die Erfindung beschrieben werden.

Es zeigen:

Fig. 1     eine Anordnung zum Schutz gegen Überspannungen mit positiver Polarität

Fig. 2     eine Anordnung zum Schutz gegen Überspannungen mit positiver und negativer Polarität

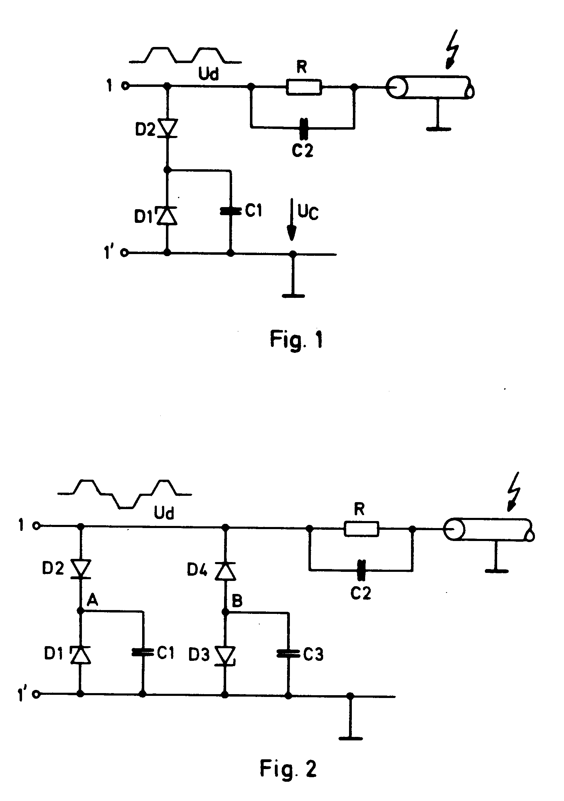

Bei der in Fig. 1 gezeigten Schaltung ist die Überspannungsschutzschaltung zwischen die Klemmen 1 und 1' eines Koaxialkabelsystems eingeschaltet, wobei die Klemme 1 mit dem Innenleiter des Koaxialkabels und die Klemme 1' mit Masse verbunden ist. Die Klemmen 1 und 1' können sowohl die Eingangs wie die Ausgangsklemmen eines Gerätes sein z.B. eines Senders oder eines Empfängers. Die Überspannungsschutzschaltung besteht aus einem als Z-Diode ausgebildeten Begrenzungselement D1, dem der Kondensator C1 parallel geschaltet ist, sowie einer mit dieser Anordung in Reihe geschalteten Diode D2. Diese ist in Sperrichtung betrieben und mit ihrer Anode mit der Signalleitung verbunden, während die Z-Diode ebenfalls mit ihrer Anode mit Masse verbunden ist.

Tritt, z.B. durch Blitzeinwirkung oder Induktion bei Beschädigung parallel verlegter Starkstromkabel, eine Überspannung positiver Polarität und entsprechender Höhe auf, so wird die Diode D1 leitend und die Überspannung wird auf einen durch die Summe der Durchbruchspannung der Diode D1 und der Durchlaßspannung der Diode D2 bestimmten Wert $U_{D1} + U_{D2}$ begrenzt. Die Begrenzung des Stromes erfolgt über einen Widerstand R. Dieser kann zusätzlich eingeschaltet sein, er kann entfallen, wenn eine Fernspeiseweiche eingebaut ist. Durch den Kondensator C2 wird der Widerstand R für hohe Frequenzen überbrückt.

Durch entsprechende Auswahl des Begrenzungselementes D1 kann eine weiter Bereich von Überspannungen abgedeckt werden, wodurch die Überspannungsschutzschaltung an die zu schützenden Bauteile in dem an die Klemme 1 und 1' angeschlossen Gerät angepaßt werden kann. Anstelle einer Z-Diode kann auch ein Varistor eingesetzt sein, der in bekannter Weise bei einer bestimmten Spannung niederohmig wird und dadurch die Überspannung ableitet.

Ein wichtiger Vorteil dieser Schaltungsanordnung ist die geringe Belastung des übertragenen digitalen Signals. Der Kondensator C1 wird über die Diode D2 bei Erreichen des Scheitelwertes Ud der positiven Halbwelle der Signalspannung auf den Wert Uc aufgeladen. Dieser Wert entspricht in etwa dem Wert Ud - Ud2. Fällt der Wert der Signalspannung Ud wieder unter den der Kondensatorspannung Uc, so entlädt sich der Kondensator C1 über die beiden Dioden D1 und D2 auf einen niedrigeren Wert. Wird dieser Wert bei der nächsten Periode wieder überschritten, dann wird die Diode D2 wieder leitend und es fließt kurzzeitig ein Ladestrom über die Diode D2 in den Kondensator C1. Der Strom durch das Begrenzungselement D1 ist bei Betrachtung des Aufladevorganges vernachlässigt, da er wesentlich kleiner ist als der Strom durch den Kondensator C1.

Die Spannung Uc dient dabei als Vorspannung zur Einstellung des Arbeitspunktes der Diode D2. Dieser liegt im negativen Teil der Diodenkennlinie, d.h. die Diode D2 wird durch die Spannung Uc in Sperrichtung vorgespannt. Daraus resultiert die sehr kleine Kapazität der gesamten Anordnung. Sie liegt in der Größenordnung 0,7 pF. Der Wert der Kondensatorkapazität ist abhängig von der Taktfrequenz des übertragenen digitalen Signals und der Blitzbeeinflussung zu bemessen.

Besonders vorteilhaft ist es, für den Kondensator ein Chip-Bauteil zu verwenden. Dieses kann mit Anschlußflächen unmittelbar in die Schaltung eingelötet werden kann.Hierdurch sind für die gesamte Anordnung Serieninduktivitäten in der Größenordnung von kleiner als 5 nH zu erreichen. In einem ausgeführten Beispiel betrug die Grenzfrequenz des aus der Sperrschichtkapazität der Diode D2 und den Serieninduktivitäten von D2 und C1 gebildeten Serienresonanzkreises ca. 2,7 GHz. Somit lag die Grenzfrequenz weit über dem Bereich der Taktfrequenz von ca. 1 GHz des übertragenen digitalen Signals.

Im übertragenen digitalen Signal können längere Folgen von Nullen auftreten. Um das Absinken der Kondensatorspannung Uc während dieser Zeit möglichst gering zu halten, muß die durch die Sperrwiderstände der Dioden D1 und D2 sowie durch die Kapazität des Kondensators C1 bestimmte Entladezeitkonstante möglichst groß sein gegenüber der Dauer der Nullfolge. Die Sperrströme der Diode D2 und der Z-Diode D1 müssen dehalb möglichst klein sein.

Die Dimensionierung der Ansprechspannung des Begrenzungselementes ergibt sich aus der Größe der Spannung des Datensignals, der maximal zulässigen Überspannung und der Forderung an den Sperrstrom der Dioden D1 und D2. Als Dioden D1 und D2 können handelsübliche Halbleiterelemente verwendet werden. Setzt man für die Diode D2 eine Serienschaltung anstelle einer Einzelschaltung von Dioden ein, so kann die Grenzfrequenz weiter erhöht werden. Die Diode D2 kann hinsichtlich ihrer Belastbarkeit großzügiger bemessen werden, da ihre Sperrschichtkapazität durch die Lage ihres Arbeitspunktes niedriger ist als in der bekannten Anordnung.

Die erfindungsgemäße Überspannungsschutzschaltung bietet neben dem Vorteil der geringen Bauteilkosten und der relativ hohen Grenzfrequenz auch den Vorteil, daß in einfacher Weise ein Signal für die Pegelüberwachung des übertragenen digitalen Signals abgeleitet werden kann. Dieses Signal ist die Spannung am Kondensator C1. Der durch die Anschlüsse des Kondensators gebildete Meßausgang ist durch das Begrenzungselement D1 ebenfalls gegen Überspannungen geschützt.

Fig. 2 zeigt eine Überspannungsschutzschaltung, die gegenüber der in Fig. 1 gezeigten Schaltung in vorteilhafter Weise so weitergebildet ist, daß Schutz gegen positive und negative Überspannungen erreicht wird. Sie ist gegenüber der in Fig. 1 gezeigten Schaltung durch die Z-Diode D3 als Begrenzungselement sowie durch die Diode D4 und durch den Kondensator C3 erweitert. Die Z-Diode D3 und die Diode D4 sind antiparallel zu den entsprechenden Elementen in Fig. 1 angeschlossen. Zwischen den jeweiligen Verbindungspunkten A und B von Diode und Z-Diode steht der Spitze-Spitze-Wert des digitales Signals zur Verfügung. Diese Schaltung bietet daher den zusätzlichen Vorteil, daß damit bei z.B. ternären Signalen die Pegel für positive und negative Einsen getrennt gemessen und überwacht werden können.

## Patentansprüche

1. Schaltungsanordnung zum Überspannungsschutz für breitbandige Leitungssysteme, mit einer Serienschaltung aus einer Diode (D2) und einem Begrenzungselement (D1) und einem Kondensator (C1) parallel zum Begrenzungselement (D1), der nur durch die Kondensatorspannung in Sperrichtung vorgespannt ist, dadurch gekennzeichnet, daß der Kondensator durch das über den Übertragungsweg übertragene digitale Signal bei Erreichen seines Scheitelwertes (Ud) aufgeladen wird und dadurch eine Kondensatorspannung zur Verfügung steht, an der ein Pegelüberwachungssignal abnehmbar ist.

2. Schaltungsanordnung nach Anspruch 1, dadurch gekennzeichnet, daß eine weitere Anordnung bestehend aus einem Begrenzungselement (D3) mit parallel geschaltetem Kondensator (C3) und einer Diode (D4) vorgesehen ist, wobei das weitere Begrenzungselement (D3) und die weitere Diode (D4) antiparallel zum ersten Begrenzungselement (D1) und zur ersten Diode (D2) geschaltet sind.

3. Schaltungsanordnung nach Anspruch 1 oder 2, dadurch gekennzeichnet, daß das Begrenzungselement (D1 bzw. D1 und D3) eine Z-Diode ist.

## Claims

1. Overvoltage protection circuit arrangement for broadband line systems, comprising a series combination of a diode (D2) and a limiting element (D1) and a capacitor (C1) connected in parallel to the limiting element (D1), which capacitor is reverse-biased only by the capacitor voltage, characterized in that the capacitor is charged by the digital signal transmitted through the transmission path when the digital signal reaches its peak value (Ud) and, consequently, a capacitor voltage is available from which a level monitoring signal may be tapped.

2. Circuit arrangement as claimed in Claim 1, characterized in that a further arrangement comprising a limiting element (D3) with a parallel combination of a capacitor (C3) and a diode (D4) is provided in which the further limiting element (D3) and the further diode (D4) are arranged in anti-parallel to the first limiting element (D1) and to the first diode (D2).

3. Circuit arrangement as claimed in Claim 1 or 2, characterized in that the limiting element (D1, D1 and D3, respectively) is a Z-diode.

## Revendications

1. Montage de circuit limiteur de tension pour des réseaux à large bande, comportant un montage en série d'une diode (D2) et d'un élément limiteur (D1) et un condensateur (C1) parallèle à l'élément limiteur (D1), qui n'est polarisé dans le sens bloquant que par la tension de condensateur, caractérisé en ce que le condensateur est chargé par le signal numérique transmis par l'intermédiaire de la voie de transmission, lorsqu'il atteint sa valeur maximale (Ud), et qu'ainsi une tension de condensateur, sur laquelle peut être pris un signal de surveillance de niveau, est disponible.

2. Montage de circuit suivant la revendication 1, caractérisé en ce qu'un autre montage constitué d'un élément limiteur (D3) avec un condensateur (C3) connecté en parallèle et une diode (D4) est prévu, l'autre élément limiteur (D3) et l'autre diode (D4) étant connectés de manière antiparallèle au premier élément limiteur (D1) et à la première diode (D2).

3. Montage de circuit suivant la revendication 1 ou 2, caractérisé en ce que l'élément limiteur (D1 ou D1 et D3) est une diode de Zener.

Fig. 1

Fig. 2